# EUROPEAN PATENT APPLICATION

(11) **EP 2 740 364 A1**
(43) Date of publication of application: **11.06.2014**
(21) Application number: 12196294.8
(22) Date of filing: 10.12.2012
(51) Int. Cl.: A22B 5/00, A01N 1/00

(54) **Cool-box for dead animals**

(71) Applicant: Coolworks B.V., 6026 RB Maarheeze (NL)
(72) Inventor: Thomasse, Ton, 6026 RB Maarheeze (NL)
(74) Representative: Vogels, Leonard Johan Paul

(57) **Abstract**

The present invention relates to an improved storage system (100) for dead animals, an improved cover (200) for the storage system, as well as to a method for collecting dead animals

The invention is in the field of storage of dead animals, such as cows, pigs, poultry, and the like, comprising a receiver (100) and a container (19).

## Description

### FIELD OF THE INVENTION

The present invention relates to an improved storage system for dead animals, an improved cover for the storage system, as well as to a method for collecting dead animals.

### BACKGROUND OF THE INVENTION

The invention is in the field of a storage system of dead animals, such as cows, pigs, poultry, and the like, comprising a receiver and a container.

It is known to store dead animals, typically for a short period of time. At regular intervals, or on demand, a collection vehicle, such as truck, may come by, collect the dead animal, and transport the dead animal to e.g. a destructor.

In a simple form the storage system consists of a bin or the like, typically a plastic bin, or sometimes not more than a plastic cap, capable of housing the dead animal. Such is regarded insufficient in view of health and environmental issues.

A more advance system, such as disclosed in Dutch Patent NL1009592, the storage system for dead animals comprises a number of containers per system, at least one cooling units per system, **characterized in that** the containers are at least partially present in the soil, preferably fully present in the soil. The system disclosed has various disadvantages. First of all the storage system suffers from a design flaw, causing insufficient regulation of temperature, humidity, and maintenance of dead animals. Further, the system is complex in use, especially when dead animals are collected. In such a case either the animals are not well accessible, or as disclosed the whole container needs to be lifted and transported to e.g. a destructor. Despite claimed advantages still transport of dead animals is cumbersome, the animals are not well conserved, and the animals are still not easily accessible. It is noted that a lower temperature of the ground may in principle help in conservation of dad animals, but such is not enough, especially during warmer periods or in warmer climates. A risk of spread of viruses and bacteria is still present. Further disadvantages relate to malodour, a too high speed of deterioration and decomposition of the carcass, and reduced quality of the carcass.

The prior art storage system further typically suffer from a lack of storage capacity, and a lack of preservation of dead animals during storage.

The present invention therefore relates to a storage system for dead animals and further aspects thereof, which overcomes one or more of the above disadvantages, without compromising functionality and advantages.

### SUMMARY OF THE INVENTION

It is an object of the invention to overcome one or more limitations of the storage system for dead animals of the prior art and at the very least to provide an alternative thereto, thereby allowing amongst others storage of a large number of dead animals during a prolonged period of time.

In a first aspect, the invention relates to a storage system according to claim 1. By providing a storage system in the ground it is easier to deposited dead animals in the present storage system. As the present system can comprises more than one container, and as the present system can be relatively large, such as a few cubic meter large, many dead animals can be deposited in the present storage system. As a consequence the frequency of collecting dead animals can be much lower. Also the service of collecting is much cheaper. Further the CO₂ footprint of collection is reduced significantly. Even further larger trucks can be used. Also a size of a truck relative to an amount of dead animals to be collected can be adapted much more precise. It is noted that the present system provides dead animals having a relative lower weight, as water being part of the body weight has been removed from the dead animal during storage. The present system also provides an improved loading and unloading of dead animals. As a consequence, fewer trucks are needed; fewer drivers are needed, less maintenance costs for trucks, faster loading and unloading, etc. Such may seem trivial, but at present in various countries there is already a shortage of truck-drivers, and roads are congested.

As such the present system has optimized various aspects taking into account a destruction chain process as a whole, e.g. involving a destruction company, transportation, environment, and farm conditions.

As the present storage system is in many aspects better, also an image of the agricultural sector is improved, as being environmentally friendly, etc.

By consequently separating influences from outside, such as visitors, suppliers, and influences from an agricultural firm, such as areas in use to provide feed to cattle, chances of infection are minimalized (the so called dirty clean way system). With respect to the present invention it is therefore preferred to keep dead animals away from a farm, preferably at a predetermined location, such as close to or at a road, the road being accessible to dead animal collectors.

With the present storage system a need for containers, bins, caps, and the like, alongside e.g. a road is absent. In fact, as storage is improved, a need for collection on short notice of dead animal is virtually absent. The amount of odour and possible contamination to the environment is minimalized, or virtually absent.

Also the quality of the dead animals is much better, e.g. in terms of preservation and water content. Subsequent processing of dead animals is thereby improved; fats, bioethanol, and other compounds can be obtained at higher yields and with a higher efficiency.

In the present system dead animals are stored in at least one container. In a container more than one dead animal may be stored. Typically the containers can contain a few pigs or cows, in an example having a volume of 0.2-2 m³, preferably a volume of 0.5-1,5 m³, more preferably a volume of 0.75-1,0 m³, such as 0.95 m³. In the housing typically a number of containers are present, such as 1-5. In a preferred embodiment 2-3 containers are present. It is preferred not to have too large storage systems; rather a further system is added, typically in relation to a size of a farm.

The cooling unit is capable of cooling the storage system under environmental conditions, having a certain load of animals. With the present system dead animals are cooled to 2-8 °C, preferably to 3-6 °C. Also, the cooling unit removes any or most of the water generated and water liberated from the dead animals.

The removable cover of the present storage system provides access to the at least one container, such that the container can be removed from the present storage system and emptied in e.g. a truck. Such is different from the prior art, where e.g. the whole storage system (possibly with exception of a concrete housing) is removed. In an example the removable cover also comprises at least one lid, typically at least one lid per container, for loading dead animals. In an example the lid is attached to the removable cover, such as by one or more hinges, or the lid can be remove all together and put aside.

It is preferred to locate the cooling unit in the removable cover. Therewith e.g. a prolonged preservation of a relatively large number of dead animals is provided. Also improved cooling is provided. Further a risk of ground water hampering the cooling unit in its function is reduced.

It is further preferred to make use of a repositioning unit for the removable cover. Such as repositioning unit provides removing the removable cover by one person, without much trouble. Once removed, the at least one container is fully accessible, and can be emptied in e.g. a truck.

It is also preferred to provide a separate liquid collector. As dead animals produce body fluids, in significant amounts, it is preferred to have this excess water removed into a liquid collector, such as a collector well. Thereby e.g. a larger number of animals can be stored for a longer period of time.

Further it is preferred to provide a controlling unit for controlling e.g. temperature and reducing humidity. Preferably the controlling unit is integrated with the cooling unit, or a further controller for the cooling unit is provided. It has been established that in order to preserve the present dead animals well, especially temperature and humidity need to be controlled adequately. It is preferred to control the temperature under ambient conditions with an accuracy of about 1 °C, such as between 3-5 °C, and to control humidity within a few %, preferably as low as possible, such as from 20-30%.

The present invention provides a solution to one or more of the above mentioned problems and overcomes drawbacks of the prior art.

Advantages of the present description are detailed throughout the description.

### DETAILED DESCRIPTION OF THE INVENTION

In an exemplary embodiment of the present storage system, the at least one container comprises a handle, preferably a rotatable handle, wherein the handle preferably comprises first guiding means, such as a dumbbell shaped first guiding means, wherein the handle preferably is mounted to a reinforced rotator. As such the handle can be rotated upwards when removing a container from the present storage system. When in upward position a clamp or grip from a collector, such as a truck, is guided to an optimal position by the first guiding means. The container can be removed from the storage system, and in one movement be unloaded into a truck. If required, the container can be cleaned or replaced. For durability the rotator may be reinforced. When the container is positioned in the present storage system the rotator can be rotated to a downward position, thereby allowing free access of dead animals to the container.

In an exemplary embodiment of the present storage system, the at least one container is made from a lightweight and robust material, such as from a polymer, such as a plastic, such as PE or PP. The material preferably can also withstand acidic and caustic conditions, which may be caused by dead animals.

In an exemplary embodiment of the present storage system, the at least one container comprises one or more lifts for elevating the container.

In an exemplary embodiment of the present storage system, the at least one container comprises one or more re-enforcements, such as reinforcements along a perimeter of the container, such as a steel or aluminium reinforcement. As containers are bound to get damaged during handling thereof, such as reinforcement increases lifetime.

In an exemplary embodiment of the present storage system, the housing comprises second guiding means for guiding the at least one container relative to the housing. The guiding means can relate to slides, allowing the container to be placed into the storage system and removed there from with ease and without a risk of getting damaged during such an action.

In an exemplary embodiment of the present storage system, the housing is made from a durable and robust material, preferably a water tight material, such as concrete, preferably in one piece, such as cast concrete. It especially preferred to have a watertight housing, thereby preventing moisture from entering the housing. As such conditions in the storage system can be maintained as required.

In an exemplary embodiment of the present storage system, the housing comprises one or more integrated assembly plates, such as for assembling the present repositioning unit. These are preferably located in the housing, such as at a corner thereof.

In an exemplary embodiment of the present storage system, a condenser is located above the removable cover. As such body fluids can be removed from the present storage system to a separate collector, thereby improving preservation of the dead animals.

In an exemplary embodiment of the present storage system, the cooling unit comprises a condense remover preferably located above and aside the removable cover, such as a hose. Therewith condense can be transferred to a separate location.

It is preferred to have the cooling unit integrated in the removable cover, e.g. in view of size of cooling capacity installed, ease of maintenance, ease of installation, etc.

It is preferred that the cooling unit comprises a stainless steel evaporator in view of durability. It is further preferred that the cooling unit includes a controller in view of optimal performance thereof and of the storage system in general. Preferably the controller provides an optimised cooling regime, such as by cycles of cooling.

In an exemplary embodiment of the present storage system, the repositioning unit comprises a cover rotator and/or a cover lifter, preferably an integrated rotator and lifter, wherein the rotator and lifter are preferably attached to the housing, and wherein the rotator preferably rotates along a vertical axis located at a corner of the housing. Therewith the present cover can be removed with ease, can be repositioned, and be located precisely on the housing, thereby securing maintenance of the conditioning of dead animals. In view of the latter, it is preferred that the removable cover comprises sealing means, such as a sealant, such as a rubber sealant. A ring or the like may be provided on the cover, on the housing, or on both. Preferably the sealant is enclosed in a groove or the like. As an alternative the removable cover may be moved along guiding means, such as a glide, a roller bearing, and combinations thereof, allowing movement in a horizontal plane. It is also preferred in the latter case to lower the removable cover once repositioned in order to provide adequate sealing.

In an exemplary embodiment of the present storage system, the removable cover comprises one or more openings, and one or more lids for closing the openings, preferably one or more lids attached to the removable cover by means of a hinge, wherein the openings are suited for receiving a dead animal in the container. Therewith a dead animal can be loaded into the present storage system with ease, and without a need to remove the present cover.

It is preferred that the cover comprises insulation material in order to optimise (maintenance) of cooling conditions in the storage system.

In order to prevent unauthorized access passive and/or active closing means, such as a hydraulic cylinder, are preferably provided. Preferably the closing means are removable. They may be put back when e.g. the cover needs to be opened or closed.

In an exemplary embodiment of the present storage system, the cover rotator and/or cover lifter comprise electrical and/or pneumatical and/or hydraulic means for lifting and/ or rotating. Such means support lifting and rotation. As the cover and housing are, when in use, sealed by sealants, the cover may be lifted (slightly) when being opened, and lowered when put back, preferably using lifting means. A rotator may rotate the cover along a vertical (virtual) axis, e.g. positioned at a corner of the housing. Less preferred, a rotator may rotate the cover along a (virtual) horizontal axis, positioned parallel to a side of the housing.

In an exemplary embodiment of the present storage system, the cooling unit uses an environmental friendly cooling liquid, such as a natural refrigerant, having a GWP <5, such as propane. These liquids provide for a relative low consumption of energy compared to prior art coolants.

In line with the above general controlling unit, the present system may further comprises a controlling unit for controlling temperature and reducing humidity in the storage system.

In second aspect the present invention relates to a method for storing dead animals, such as by using a storage system according to the invention, wherein dead animals are cooled in a temperature range of 2-10 °C, preferably from 3-8 °C, such as 4-6 °C. Advantages thereof are detailed throughout the description.

In third aspect the present invention relates to a method for collecting dead animals, wherein dead animals are temporarily stored in a storage system according to the invention, wherein the removable cover is removed from the storage system, wherein the at least one container is lifted from the housing and emptied into a transporter, such as a truck, and wherein dead animals are collected ac-cording to a predetermined schedule. An advantage is that animals can now be stored during a prolonged period of time, under almost any weather condition, such as for at least one week, typically two or more weeks. Further advantages thereof are detailed throughout the description.

In fourth aspect the present invention relates to a removable cover comprising a repositioning unit comprising a cover rotator and/or a cover lifter, preferably an integrated rotator and lifter, wherein the rotator and lifter are preferably attached to the housing, and wherein the rotator preferably rotates along a vertical axis located at a corner of the housing, and/or
wherein the removable cover comprises sealing means, such as a sealant, such as a rubber sealant, and/or
wherein the removable cover comprises one or more openings, and one or more lids for closing the openings, preferably one or more lids attached to the removable cover by means of a hinge, wherein the openings are suited for receiving a dead animal in the container, and/or
wherein the cover comprises insulation material, and/or comprising passive and/or active closing means, such as a pump. Advantages thereof are detailed throughout the description.

The invention will hereafter be further elucidated through the following examples and figures which are exemplary and explanatory of nature and are not intended to be considered limiting of the invention. To the person skilled in the art it may be clear that many variants, being obvious or not, may be conceivable falling within the scope of protection, defined by the present claims.

### FIGURES

In figure 1 an example of the present storage system is shown. In figure 2 a schematic representation of the removable cover is shown.

In figure 3 a schematic representation of the removable cover is shown.

In figure 4a a schematic representation of the container is shown.

In figure 4b a container is shown.

In figure 5 a schematic representation of the housing is shown. In figure 6 a schematic representation of the present storage system is shown.

### DETAILED DESCRIPTION OF THE FIGURES

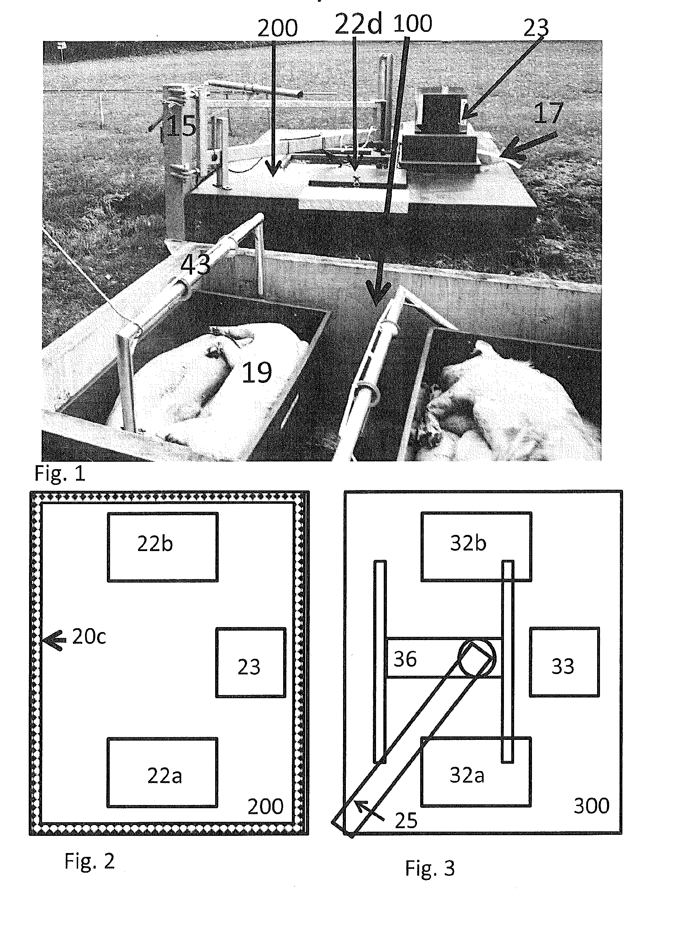

In figure 1 an example of the present storage system is shown, having dimensions of 2 by 2,5 by 1,05 m³ having a wall of 12 cm reinforced concrete and a floor of 15 cm thick reinforced concrete. Further a drain is provided in the bottom of the housing, being connected to the separate condense collector. Therein a housing (100) of cast concrete, in one piece is shown, capable of housing two containers (19). Each container is filled with a number of pigs. Attached to the container is a stainless steel rotatable handle (43), the handle comprising guiding means. Further a rotator (15) is provided, capable of lifting and rotating the cover (200), typically from a position wherein the housing, and pigs therein, are sealed from the environment, to an open position, as shown, allowing the containers to be removed or to be accessed.

The cover comprises various lids (22d), attached to a hinge, which can be opened, such as for introducing a pig into the container. Integrated into the cover is a cooling unit (23) for cooling the pigs and maintaining humidity. Attached thereto is a hose (17) for removing condense. Further a separate liquid collector (68) is provided (not shown).

In figure 2 a cover (200) having a rubber sealant (20c) for sealing the cover to the housing is shown. Further two openings (22a,22b) for introducing animals and a cooling unit (23) are shown, all being integrated into the cover.

In figure 3 a cover (300) having two openings (32a,32b) for introducing animals, a reinforcement (36) for attaching the rotator (25) to the cover, a rotator (25), and a cooling unit (23) are shown, all being integrated into/attached to the cover.

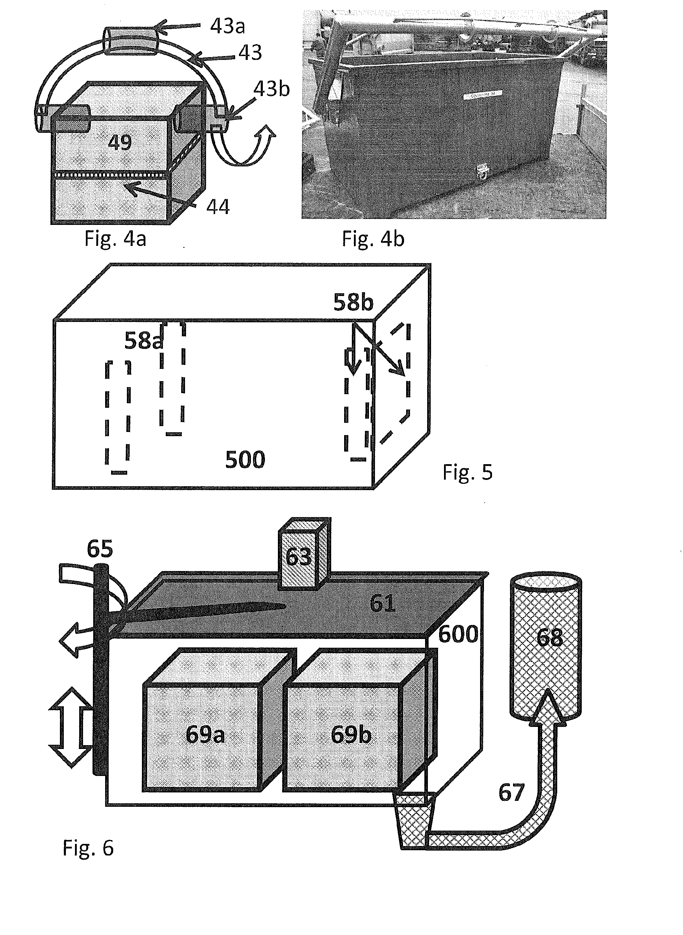

In figure 4a a receiver (49) having a rotatable handle (43), being attached by reinforcement elements (43b), and having a second guiding means (43a) for removing the container from the housing and reintroducing it into the housing. Further optional reinforcements (44) are provided to the containers, typically steel reinforcements. The containers are made of PP or PE or any suitable thermoplastic material, having sufficient thickness. Not shown are legs for maintaining the container slightly above the bottom of the housing. Therewith cooling is further improved. In figure 4b a present container is shown.

In figure 5 a schematic drawing of first guiding means (58a, 58b) is shown in housing (500). Guiding means may be provided at one or more sides of the housing, and/or in corners of the housing. The guising means support removing and reintroducing containers into the housing, thereby securing a position and preventing damage.

In figure 6 a schematic drawing is shown of the housing (600) having two containers (69a,69b). The means (65) for rotating and lifting the cover (61) are also shown. It is noted that separate means for lifting and rotating may be provided. Further cooling unit (63) is shown. Also a drain provided in a bottom section of the housing, having a connection (67), such as a hose, for transferring condense towards condense collector (68) is shown. The condense collector is located apart from the housing, typically a few meters or less away therefrom.

## Claims

1. Improved storage system for dead animals, comprising
at least one container (19) for receiving dead animals,
a housing (100) capable of housing the at least one container, wherein the housing is located largely underground when in use, a cooling unit (23), and
a removable cover (200),
**characterized in** one or more of
the cooling unit is located in the removable cover,
a repositioning unit (15) for the removable cover, and
a separate liquid collector (68), such as a collector well.

2. Storage system according to claim 1, wherein the at least one container comprises a handle (43), preferably a rotatable handle, wherein the handle preferably comprises first guiding means (43a), such as a dumbbell shaped first guiding means, wherein the handle preferably is mounted to a reinforced rotator (43,43b), and/or
wherein the at least one container is made from a lightweight and robust material, such as from a polymer, such as a plastic, such as PE or PP, and/or
wherein the at least one container comprises one or more lifts for elevating the container, and/or
wherein the at least one container comprises one or more re-enforcements (44).

3. Storage system according to one or more of the preceding claims, wherein the housing comprises second guiding means (58a,58b) for guiding the at least one container relative to the housing, and/or
wherein the housing is made from a durable and robust material, preferably a water tight material, such as concrete, preferably in one piece, such as cast concrete.

4. Storage system according to one or more of the preceding claims, wherein a condenser is located above the removable cover, and/or
wherein the cooling unit comprises a condense remover (17) preferably located above and aside the removable cover, such as a hose, and/or
wherein the cooling unit an removable cover are integrated,
and/or
wherein the cooling unit comprises a stainless steel evaporator, and/or
wherein the cooling unit includes a controller.

5. Storage system according to one or more of the preceding claims, wherein the repositioning unit comprises a cover rotator and/or a cover lifter, preferably an integrated rotator and lifter, wherein the rotator and lifter are preferably attached to the housing, and wherein the rotator preferably rotates along a vertical axis located at a corner of the housing, and/or
wherein the removable cover comprises sealing means (20c), such as a sealant, such as a rubber sealant, and/or
wherein the removable cover comprises one or more openings, and one or more lids for closing the openings (22a,22b), preferably one or more lids (22d) attached to the removable cover by means of a hinge, wherein the openings are suited for receiving a dead animal in the container, and/or
wherein the cover comprises insulation material, and/or comprising passive and/or active closing means, such as a pump.

6. Storage system according to one or more of the preceding claims, wherein the cover rotator and/or cover lifter comprise electrical and/or pneumatical and/or hydraulic means for lifting and/or rotating.

7. Storage system according to one or more of the preceding claims, wherein the cooling unit uses an environmental friendly cooling liquid, such as a natural refrigerant, having a GWP <5, such as propane, and/or
further comprising a controlling unit for controlling temperature and reducing humidity in the storage system.

8. A method for storing dead animals, such as by using a storage system according to any of claims 1-7, wherein dead animals are cooled in a temperature range of 2-10 °C, preferably from 3-8 °C, such as 4-6 °C.

9. Method for collecting dead animals, wherein dead animals are temporarily stored in a storage system according to any of claims 1-7, wherein the removable cover is removed from the storage system, wherein the at least one container is lifted from the housing and emptied into a transporter, such as a truck, and wherein dead animals are collected according to a predetermined schedule.

10. Removable cover comprising a repositioning unit comprising a cover rotator and/or a cover lifter, preferably an integrated rotator and lifter, wherein the rotator and lifter are preferably attached to the housing, and wherein the rotator preferably rotates along a vertical axis located at a corner of the housing, and/or
wherein the removable cover comprises sealing means, such as a sealant, such as a rubber sealant, and/or
wherein the removable cover comprises one or more openings, and one or more lids for closing the openings, preferably one or more lids attached to the removable cover by means of a hinge, wherein the openings are suited for receiving a dead animal in the container, and/or
wherein the cover comprises insulation material, and/or comprising passive and/or active closing means, such as a pump.
